# EUROPEAN PATENT APPLICATION

(11) **EP 4 159 626 A1**
(43) Date of publication of application: **05.04.2023**
(21) Application number: 21200337.0
(22) Date of filing: 30.09.2021
(51) Int. Cl.: B64F 1/32

(54) **MOVABLE CARGO LOADING DEVICE FOR LOADING CARGO CONTAINERS IN A CARGO HOLD OR CABIN OF AN AIRCRAFT**

(71) Applicant: Airbus Operations GmbH, 21129 Hamburg (DE)
(72) Inventor: Schliwa, Ralf, 21129 Hamburg (DE); Grabow, Thomas, 21129 Hamburg (DE); Benthien, Hermann, 21129 Hamburg (DE); Poppe, Andreas, 21129 Hamburg (DE)
(74) Representative: Bird & Bird LLP

(57) **Abstract**

The present invention relates to cargo loading device (1) for loading cargo containers (11) from a taxiway (3) into the cabin or the cargo hold of an aircraft (15) employing a paternoster configuration comprising a base assembly (5) adapted to be placed on a taxiway (3), a transfer device (9) mounted on and extending from the base assembly (5), the transfer device (9) comprising a plurality of support assemblies (19, 41) each defining a support position for supporting a cargo container (11) in a horizontal position, wherein the support assemblies (19, 41) are coupled to each other so that a closed loop arrangement is formed with the support assemblies (19, 41) being arranged consecutively along the closed loop arrangement, the closed loop arrangement being arranged such that the support positions have different heights relative to the base assembly (5), wherein the transfer devices (9) further comprise a drive device (25) adapted to drive the closed loop arrangement such that the support assemblies (19, 41) are moved along a closed path so that the height of each of the support positions relative to the base assembly (5) is varied due to the movement between a lowermost position (LP) and an uppermost position (LP).

## Description

The present invention relates to a movable cargo loading device for loading cargo containers into the cargo hold or cabin of an aircraft.

From the prior art it is known that cargo containers are loaded into the cargo hold or the cabin of an aircraft by means of conveyor belts that are arranged between the cargo door and the taxiway in such a manner that they are in an inclined position. Cargo containers are loaded onto the conveyor belt and are transferred to the cargo door so that they then can further be maneuvered within the cargo hold.

Another option to load cargo containers in the cabin or cargo hold are so-called high loaders which usually comprises a chassis on which a platform is mounted that can vertically be moved between a receiving position close to the plane of the taxiway and the loading position which is at the level of the floor in the cabin or the cargo hold, respectively.

The first option requires that the containers are loaded in such a way that they may be positioned in an inclined manner without the cargo elements received in the containers being damaged. In addition, there is the risk that the containers when being arranged on the inclined conveyor belt may slide thereon. The second option of a high loader cannot continuously transfer containers from the taxiway to the cargo hold or cabin so that the time required for loading a given number of containers into an aircraft is relatively long.

Hence, it is the object of the present invention to provide a cargo loading device which allows for a continuous loading of containers into the cabin or cargo hold of an aircraft with the containers remaining horizontally aligned during transfer.

This object is achieved by a cargo loading device for loading cargo containers from a taxiway into the cabin or the cargo hold of an aircraft comprising:
a base assembly adapted to be placed on a taxiway,
a transfer device mounted on and extending from the base assembly, the transfer device comprising
a plurality of support assemblies each defining a support position for supporting a cargo container in a horizontal position,
wherein the support assemblies are coupled to each other so that a closed loop arrangement is formed with the support assemblies being arranged consecutively along the closed loop arrangement, the closed loop arrangement being arranged such that the support positions have different heights relative to the base assembly,
wherein the transfer devices further comprise a drive device adapted to drive the closed loop arrangement such that the support assemblies are moved along a closed path so that the height of each of the support positions relative to the base assembly is varied during movement between a lowermost position and an uppermost position.

Thus, the cargo loading device according to the present invention comprises a base assembly which is adapted to be placed on the taxiway. The base assembly may be formed as a vehicle having a chassis so that the base assembly may be moved across a taxiway in a self-propelled manner. It is also conceivable that the base element is formed as a trailer. However, it is also within the scope of the present invention that the base assembly is not adapted to be movable across the taxiway but shall be placed at a predetermined position.

Furthermore, according to the present invention a transfer device is mounted on the base assembly, and the transfer device comprises a plurality of support assemblies. The support assemblies are configured such that they each define a support position for a cargo container being horizontally aligned, i.e., with its bottom surface pointing downwards. In particular, the support assemblies are configured such that the horizontal alignment of the containers and the support assemblies is maintained independent of the position of the respective support assembly.

The support assemblies of the transfer device of the present invention are coupled with each other to form a closed loop arrangement, i.e., the separate support assemblies are directly coupled with each other or are each connected to a connection member such as a belt or chain which in turn forms a closed loop. The closed loop arrangement is such that the support assemblies are arranged in different heights relative to the base assembly. In particular, the arrangement can be such that each of the support assemblies are arranged in a common plane which in turn extends perpendicularly vertically when the base assembly is positioned on a taxiway.

Finally, the transfer device of the loading device according to the present invention comprises a drive device which is adapted to drive the closed loop arrangement in such a manner that each of the support assemblies are moved along the same closed path so that the height of each of the support positions relative to the base assembly is varied due to the movement. Thus, by means of the drive device it is possible to vary the height of each of the support assemblies relative to the taxiway in a synchronized manner.

The cargo loading device according to the present invention facilitates the following paternoster-like process for loading cargo containers into an aircraft with the cargo loading device being placed adjacent to the aircraft. Initially the drive device is activated and when one of the support assemblies has reached the lowermost position, it is stopped and a cargo container is loaded onto that support assembly. Then the drive device is activated so as to move the entire closed loop arrangement with the support assembly having received the cargo container being lifted. The drive device is stopped when the next support assembly is in the lowermost position so that it can also be loaded with the cargo container. These steps are repeated until the support assembly with the first cargo container has reached the level of the door through which the cargo containers shall be passed, i.e., the cabin door or the cargo door. The cargo container is then shifted into either the passenger cabin or the cargo hold of the aircraft. When this step has been completed, the driving device is activated again until the either the next support assembly has reached the level of the respective door or a further support assembly is in the lowermost or loading position.

Thus, the device of the present invention enables a continuous loading of the cargo space of an aircraft with the containers remaining in a horizontal position. Especially in case where the upward movement of the support assemblies follows a vertical or perpendicular path when the base assembly is positioned on a horizontal taxiway, the cargo loading device of the present invention does not specifically have to be adjusted for aircrafts having different levels at which the cargo or cabin doors are positioned relative to the taxiway. Instead, it is only required to control the drive device such that the closed loop arrangement stops when one of the support assemblies has reached the respective level.

In a preferred embodiment the drive device is configured such that when the support assemblies are moved along the closed path, the height of each of the support positions relative to the base assembly is continuously varied during movement between a lowermost position and an uppermost position. Hence, it is a preferred embodiment, that the closed loop arrangement is not moved stepwise and the vertical position of each of the support assemblies can be adjusted to a given height of a cargo or cabin door relative to the taxiway.

Furthermore, it is preferred when each support position defines a support plane in which the bottom elements of a cargo container are arranged when being supported in the support assembly, wherein the transfer device is configured such that when the base assembly is arranged on a taxiway and one of the support assemblies is in the lowermost position, the support plane is aligned with a plane defined by the taxiway. Such configuration enables that a cargo container may simply be slid onto the support assembly being in the lowermost position without any means required to lift the container to a certain level above the taxiway.

In another the preferred embodiment the transfer device comprises a support member formed as a closed loop and extending in a plane, the transfer device being configured such that the plane extends vertically, when the base assembly is positioned on a taxiway, wherein each of the support assemblies is formed as a support frame defining a support surface on which a cargo container may rest, wherein the support frames are rotatable relative to the support member such that the support frames remain in a horizontal position with the support surface being horizontal when the support member is moved and the base assembly is positioned on a horizontal taxiway.

In this embodiment the closed loop arrangement is formed by the support assemblies being coupled to the common support member which may be in the form of a belt or a chain. The individual support assemblies are coupled to the support member by a rotatable connection so that regardless at which position during movement of the support member effected by the drive device each support assembly is located it may remain aligned such that its support plane extends horizontally. Hence, such configuration is a mechanically simple solution to obtain that the support assemblies may be kept horizontally aligned.

It is further preferred when a portion of the closed path between the lowermost position and the uppermost position extends vertically. When the transfer device is designed such that the horizontal position of the entire cargo loading device relative to an aircraft during loading of cargo containers will not depend on the level the respective door in the aircraft has when such level is within the portion of the closed path extending vertically. This further facilitates positioning of the cargo loading device relative to an aircraft before starting the loading process.

In a further preferred embodiment a height adjustable transfer platform is provided on the base assembly, wherein the height of the platform relative to the base assembly is adjustable, wherein at least for a part of the height positions of the platform, the drive device is adjustable such that each one of the support positions can be aligned with the platform, so that a cargo container may be transferred from the one support position to the platform by a horizontal movement.

With the height adjustable transfer platform, it can be achieved that the transfer device with the movable closed loop arrangement can be placed at a distance from the fuselage of the aircraft. In addition, the platform itself can be used as a storage section where cargo containers can be stored after having been unloaded from the respective support assembly and before being loaded into the aircraft. This time interval where the cargo container is stored can be used to move the closed loop arrangement already to the next position at which a cargo container is loaded onto another support assembly. Therefore, such arrangement further accelerates the process of loading containers into an aircraft.

It is particularly preferred, when the transfer platform extends between a first end and a second end, the first end pointing towards and being adjacent to the transfer device, wherein the platform is provided with a transport device adapted to shift cargo containers between the first and second ends. This allows to better control the transfer of cargo containers from the transfer device into the aircraft.

In another preferred embodiment the base assembly comprises a first base element and a second base element, being separable from each other and each being provided with a chassis, wherein the first base element carries the hight adjustable platform and wherein the second base element carries the transfer device. In particular, one of the first base element and the second base element is formed as a tractor and the other of the first base element and the second base element is formed as a trailer. Hence, the cargo loading device of the present invention may be arranged on the combination of a tractor-trailer which facilitates the use at different places on a taxiway. Further, the cargo loading device of this embodiment can precisely be aligned to the respective door on an aircraft.

In the following the present invention will be described with reference to a drawing which depicts merely preferred embodiments.
- Figure 1: shows a side view of a first embodiment of a cargo loading device according to the present invention;
- Figure 2: shows a top view of the embodiment of figure 1;
- Figures 3 to 13: schematically show different steps of loading and unloading cargo containers into and out of an aircraft with the embodiment of figures 1 and 2 and
- Figure 14: shows a side view of a second embodiment of a cargo loading device according to the present invention.

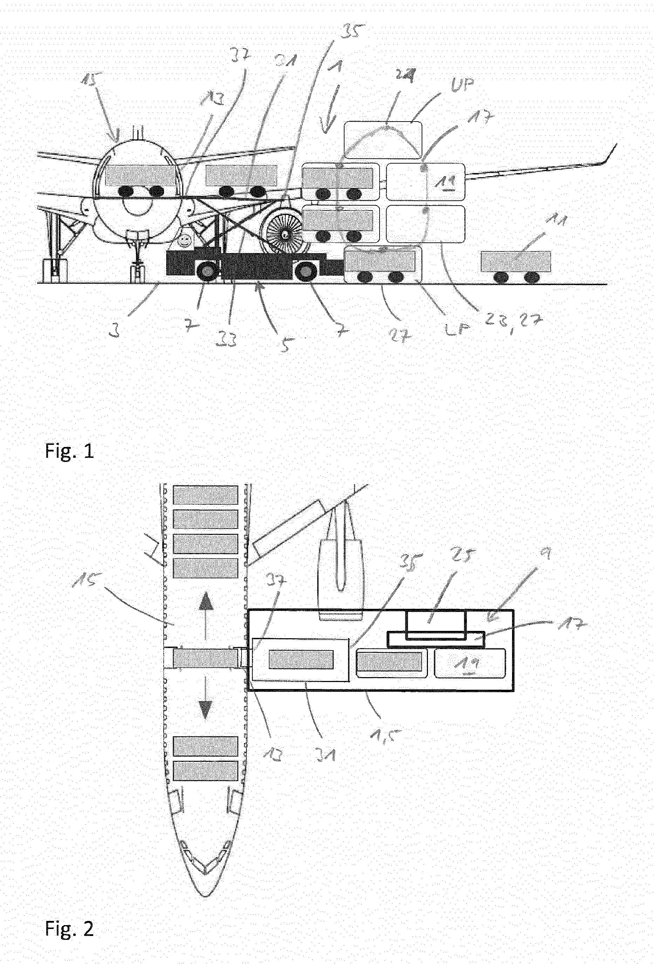

As shown in the figures 1 and 2 a first embodiment of a cargo loading device according to the present invention comprises a base assembly to be placed on a taxiway 3, the base assembly being in the form of vehicle 5 and provided with a chassis having wheels 7. The base assembly in the form of the vehicle 5 is provided with a transfer device 9 which is adapted to lift cargo containers 11, which are transferred to the device 1 by sliding them along the taxiway 3, to the level of a cargo or cabin door 13 of an aircraft 15, i.e., the cargo loading device 1 of the present embodiment is employed in the process of loading cargo containers into an aircraft 15. When the cargo container 11 in the transfer device 9 has reached the desired level, it is removed from the transfer device and shifted into the cabin or the cargo hold of the aircraft 15. In this regard is to be noted that the cargo loading device of the present invention may be employed with different types of cargo containers which are to be loaded into the cabin of the aircraft after seat rows have been removed, or into its cargo hold.

The transfer device 9 comprises a support member 17 which is guided in the transfer device 9 in such a way that it forms a closed loop extending vertically and perpendicular the taxiway 3. The support member 17 can e.g. be formed as a chain or as an belt but configurations other than these are conceivable, too. Additionally, the transfer device 9 comprises a plurality of support assemblies in the form of support frames 19 which are each coupled with the support member 17 at different positions thereon. Furthermore, the support frames 19 are rotatably coupled to the support member 17 with the rotatable connection 21 between the support frame 19 and the support member 17 being positioned such on the support frame 19 that it is above the center of gravity of the support frame. In particular, in case of such arrangement of the rotatable connection 21 on the support frame 19 it is ensured that the support frames 19 having a support surface 23 at its bottom remain aligned such that the support surface 23 extends horizontally and parallel to the taxiway 3. The support surface 23 is generally configured such that a cargo container 11 may rest on it. Thus, each support frame 19 defines a support position at which a cargo container 11 can be supported in the transfer device 9.

As can further be seen in figure 1 the support member 17 and the support frames 19 form a closed loop arrangement with the support frames 19 arranged consecutively along the support member 17. Further, in this closed loop arrangement the support positions defined by the different support frames 19 are arranged in different heights with respect to the base assembly the form of the vehicle 5. In particular, since during normal use the vehicle 5 is placed on the taxiway 3 the support positions of the different support frames 19 are located at different heights relative to the taxiway 3.

The transfer device of the embodiment shown in figures 1 and 2 comprises a drive device 25, e.g. in the form of an electric motor and a gear box, which is coupled to the support member 17 such that it is capable of moving the support member 17 so that each of the support frames 19 coupled therewith is moved along a closed path in this embodiment defined by the path along which the support member 17 extends and is guided within the transfer device 9, respectively. As can especially be seen in figure 1 this closed path comprises a lowermost position (LP) adjacent to the taxiway 3 and an uppermost position (UP) which can both be reached by each of the support frames 19 when the support member 17 is driven by the drive device 25. In particular, in this preferred embodiment the closed path comprises a vertically extending section between the uppermost position (UP) and the lowermost position (LP) so that the support frames 19 are only vertically moved when being in this section of the closed path and the drive device 25 is activated. Thus, when the closed loop arrangement in this embodiment is moved by the drive device 25 the height of each of the support positions defined by the support frames and 19 relative to the vehicle 5 is continuously varied. The letter means that this preferred embodiment the closed loop arrangement can continuously be moved and not only in a stepwise manner which would also be within the scope of the present invention.

In addition, it can be seen in figure 1 that each of the support frames 19 defines a support plane 27 parallel to the support surface 23 in which in the bottom element of the cargo containers 11, i.e., the support wheels 29 on which the container is supported, are arranged when the cargo containers 11 are received within the support frames 19. When the support member 17 is in a position where one of the support frames 19 the lowermost position (LP) 19 the support plane 27 of this support frame is arranged in the same plane in which the taxiway 3 extends. This facilitates that the cargo containers 11 can easily be slid into one of the support frames 19 when being in the lowermost position (LP) which can also be considered as a loading position.

In this embodiment the cargo loading device is also provided with a height adjustable platform 31 that is mounted on the vehicle 5 and the height of which can be adjusted by a lifting device which in this preferred embodiment are formed as hydraulic cylinders 33. The platform 31 comprises a first end 35 and a second end 37. The platform 31 is arranged in such a manner on the vehicle 5 that the first end 35 is pointing towards the transfer device 9 and is adjacent to that section of the closed path the support frames 19 are moved along, that extends vertically. When the cargo loading device 1 is employed to load or unload containers into or from an aircraft 15 the second end 37 of the platform 31 opposite the first end 35 is arranged such that it is at the entry level of the door through which the cargo containers 11 are shifted, i.e., the cabin door or the cargo door.

The platform 17 and the support frames 19 can be aligned with each other such that containers initially being received within one of the support frames 19 can be slid onto the platform 17 by a horizontal movement. In this respect it is conceivable that the platform 17 is provided with a cargo transport device that is capable of shifting cargo containers 11 between the first and the second ends 35, 37 of the platform. It can be dispensed with such transport device though, when the cargo containers used with the cargo loading device are provided with wheels or other means which facilitate horizontal movement of the containers on flat surfaces.

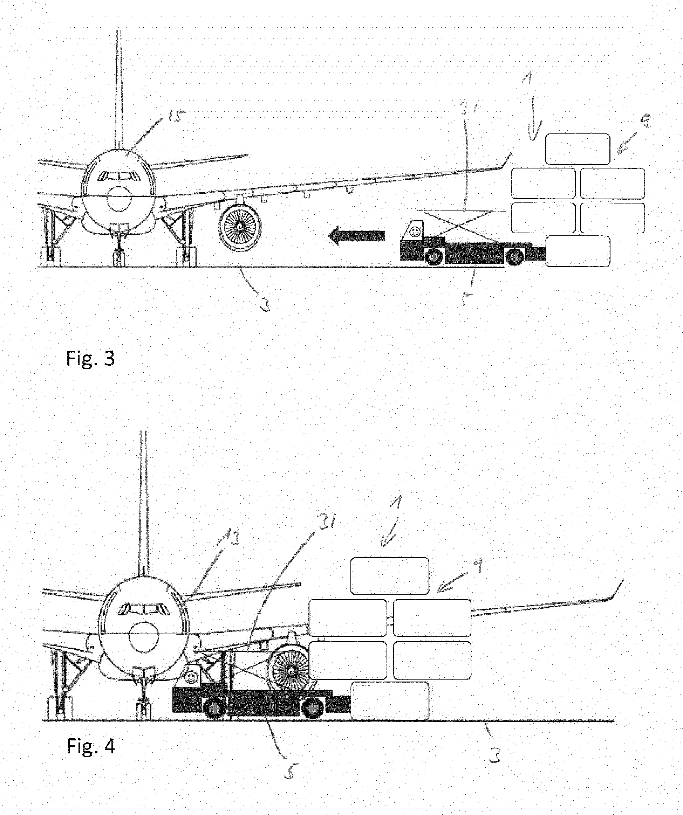

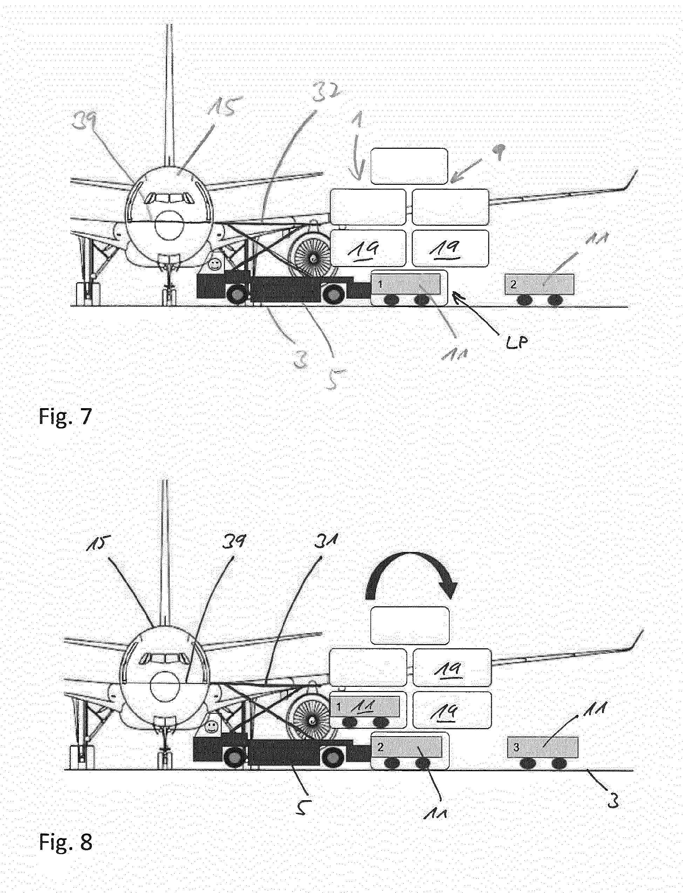

In the following it is explained with respect to figures 3 to 13 how the aforementioned embodiment of a cargo loading device 1 is employed to load cargo containers 11 into a cabin of an aircraft 15 from which seat rows have been removed before, i.e., the passenger cabin is used as a cargo space.

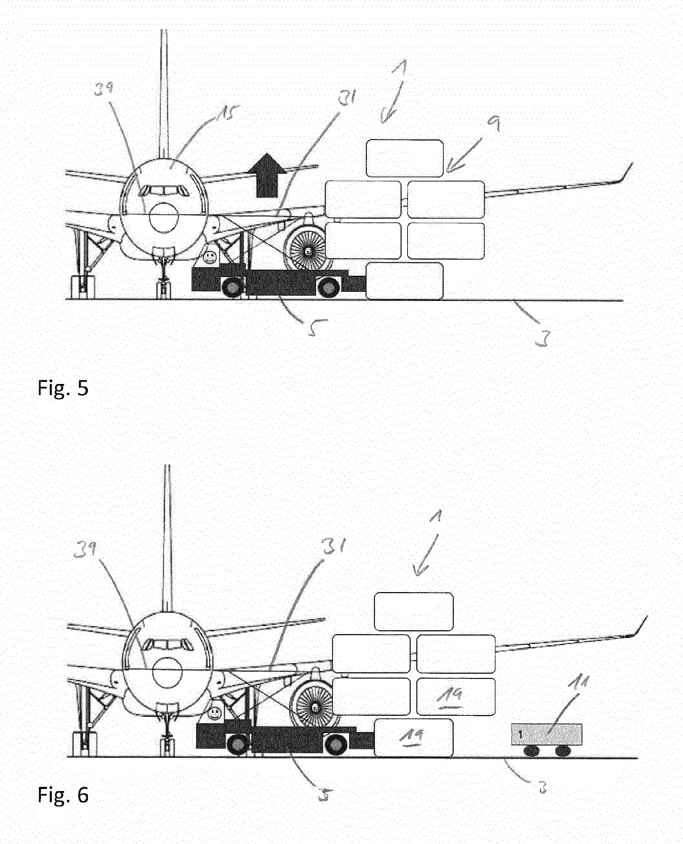

In a first step the vehicle 5 provided with the transfer device 3 and the height adjustable platform 31 is driven along the taxiway 3 into a position where it is close to the aircraft 15 with the platform 31 being horizontally aligned with the cabin door 13 (see figures 3 and 4). After this position has been reached the lifting device 33 of the cargo loading device 1 is actuated such that the platform 31 is adjusted to such a level that it extends in the same plane as the floor 39 of the passenger cabin of the aircraft 15 (see figure 5).

In the following cargo containers 11 are transported along the taxiway 3 to the cargo loading device 1 and subsequently loaded in the support frames 19 in such a manner that after one container 11 has been loaded into a support frame 19 being in the lowermost position (LP) the drive device 25 of the transfer device 9 is activated so that the closed loop arrangement with the support frames 19 is moved or rotated into a position where the next support frame 19 reaches the lowermost position (LP) (see figures 6, 7 and 8).

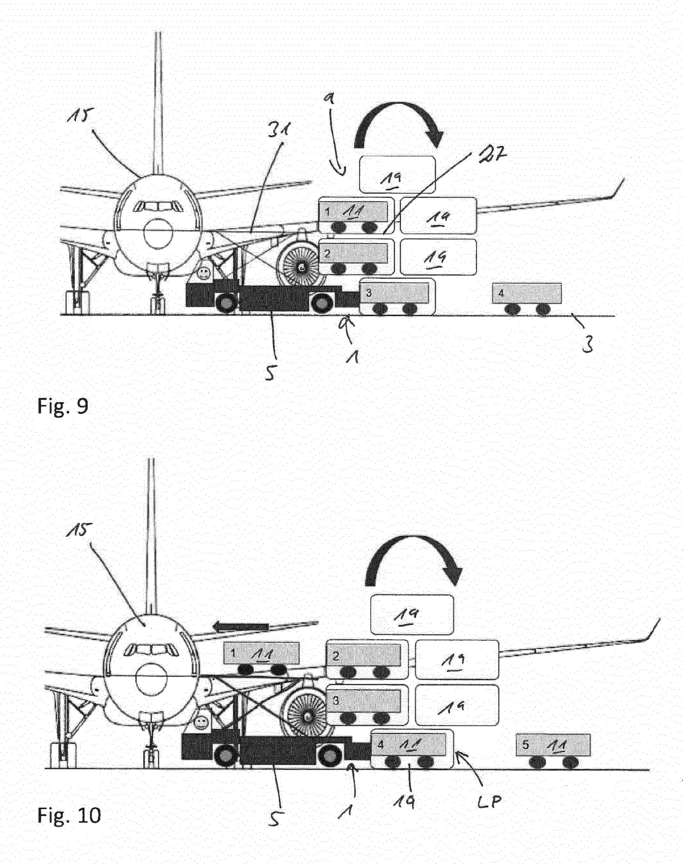

When the support frames 19 are subsequently loaded with the cargo containers 11, those support frames 19 with the cargo containers 11 are subsequently lifted. The drive device 25 is operated such that as soon as a support frame 19 reaches a height where its support plane 27 is at the same level as the platform 31, it stops so that the container 11 can be slid from the respective support frame 19 onto the platform 31. When the cargo container 11 has been unloaded from the respective support frame 19, the drive device 25 is again activated until the next support frame reaches the lowermost position (LP) so that another container 11 can be loaded into that support frame 19 (see figures 9 and 10).

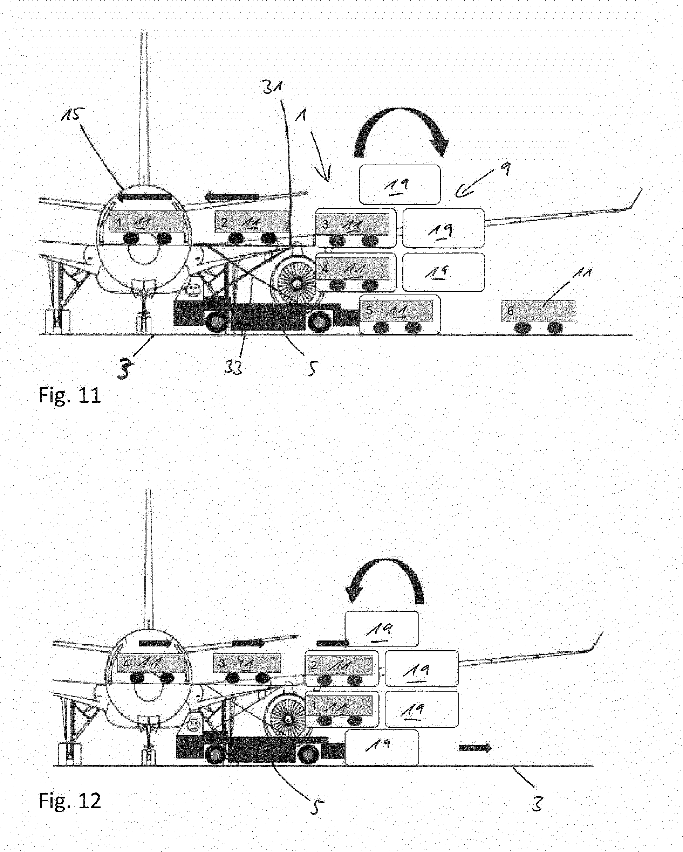

While containers 11 are moved along the platform 31 into the cabin of the aircraft 15 further containers are loaded into the support frames 19 and lifted to the level of the platform 31 (see figure 11). Thus, the embodiment of a cargo loading system acts as a paternoster which allows to continuously lift containers 11 to the level of the door through which the containers 11 are passed into the cabin of the aircraft 15. During this transfer the containers 11 remain horizontally aligned and there is no risk that the containers may slide along an inclined surface as it would be the case when a belt conveyor was employed.

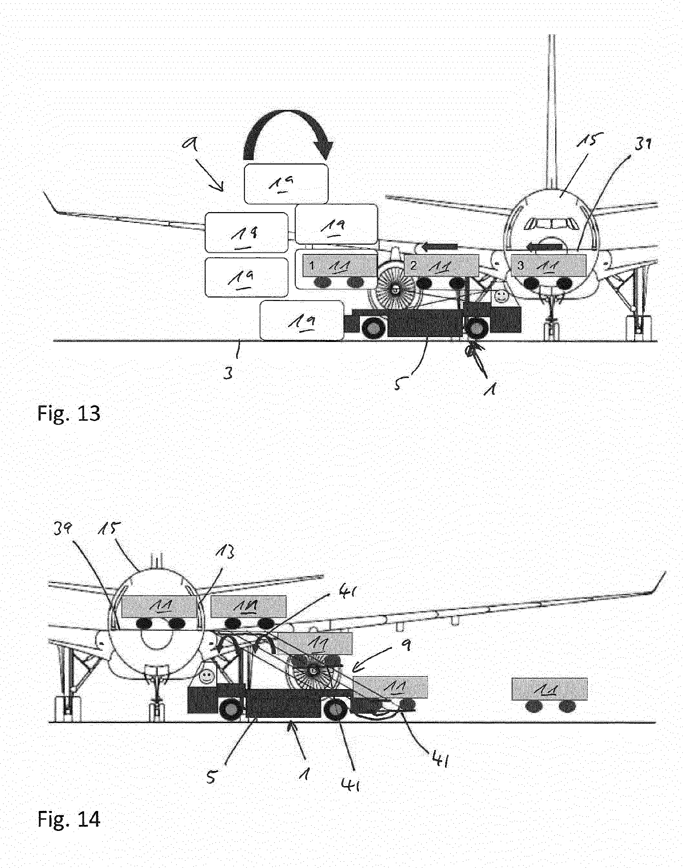

Figure 12 indicates that unloading containers from an aircraft may be performed similarly with drive device 25 operating in the opposite direction so that the support frames 19 which have received cargo containers from the platform 31 are lowered towards to the lowermost position (LP). Figure 13 shows that the cargo loading device 1 of the embodiment can also be employed to load or unload containers from the cargo hold of the aircraft 15. In this case the platform 31 is adjusted to the level of the cargo door of the aircraft, but the transfer device 9 operates the same way as shown in the figure 12. Hence, the device 1 can be used with doors arranged at different levels without any modifications to the device. Merely, the vertical position of the height adjustable platform 31 has to be adjusted.

Finally, figure 14 shows another embodiment of a cargo loading device 1'. In this embodiment the base assembly in the form of a vehicle 5 is only provided with a transfer device 9 formed as a chain of support elements 41 which form the support assemblies and which are coupled with each other so as to form a closed loop arrangement similar to an escalator. Each of the support elements 41 are adapted to support a cargo container 11 in a support position the height of which is varied when the closed loop arrangement formed of the support elements 41 is driven by a drive device not shown in figure 14.

This embodiment does not comprise a height adjustable platform and the closed path along which the support elements 41 are moved does not comprise a vertical section. Instead, a section of the path along which containers are carried is angled so that it extends from a lower position remote from the aircraft 15 to an upper position adjacent to the cabin door 13.

The drive device of this embodiment is operated such that the movement of the closed loop arrangement is stopped when a support element 41 has reached the level of the floor 39 of the cabin of the aircraft 15. Then, the cargo container 11 on that support element 41 is slid into the cabin.

Thus, this embodiment also facilitates the continuous transfer of the containers 11 into the cabin or cargo hold of an aircraft 15 with the containers 11 being supported in a horizontal position.

### Reference numerals:

- 1: cargo loading device
- 3: taxiway
- 5: vehicle
- 7: wheels
- 9: transfer device
- 11: cargo container
- 13: cabin door
- 15: aircraft
- 17: support member
- 19: support frame
- 21: rotatable connection
- 23: support surface
- 25: drive device
- 27: support plane
- 29: support wheel
- 31: platform
- 33: lifting device
- 35: first end
- 37: second end
- 39: cabin floor
- 41: support element

## Claims

1. A cargo loading device for loading cargo containers (11) from a taxiway (3) into the cabin or the cargo hold of an aircraft (15) comprising:
a base assembly (5) adapted to be placed on a taxiway (3),
a transfer device (9) mounted on and extending from the base assembly (5), the transfer device (9) comprising
a plurality of support assemblies (19, 41) each defining a support position for supporting a cargo container (11) in a horizontal position,
wherein the support assemblies (19, 41) are coupled to each other so that a closed loop arrangement is formed with the support assemblies (19, 41) being arranged consecutively along the closed loop arrangement, the closed loop arrangement being arranged such that the support positions have different heights relative to the base assembly (5),
wherein the transfer devices (9) further comprise a drive device (25) adapted to drive the closed loop arrangement such that the support assemblies (19, 41) are moved along a closed path so that the height of each of the support positions relative to the base assembly (5) is varied due to the movement between a lowermost position (LP) and an uppermost position (LP).

2. The cargo loading device according to claim 1, wherein the drive device (25) is configured such that when the support assemblies (19, 41) are moved along the closed path, the height of each of the support positions relative to the base assembly (5) is continuously varied during movement between a lowermost position (LP) and an uppermost position (UP).

3. The cargo loading device according to claim 1 or 2, wherein each support position defines a support plane (27) in which the bottom elements of a cargo container (11) are arranged when being support in the support assembly (19, 41),
wherein the transfer device is configured such that when the base assembly (5) is arranged on a taxiway (3) and one of the support assemblies (19, 41) is in the lowermost position (LP), the support plane (27) is aligned with a plane defined by the taxiway (3).

4. The cargo loading device according to one or more of claims 1 to 3, wherein the transfer device (9) comprises a support member (17) formed as a closed loop and extending in a plane, the transfer device being configured such that the plane extends vertically, when the base assembly (5) is positioned on a taxiway (3),
wherein each of the support assemblies (19, 41) is formed as a support frame (19) defining a support surface (23) on which a cargo container (11) may rest,
wherein the support frames (19) are rotatable relative to the support member (17) and configured such that the support frames (19) remain in a horizontal position with the support surface (23) being horizontal when the support member (19) is moved and the base assembly (5) is positioned on a horizontal taxiway.

5. The cargo loading device according to one or more of claims 1 to 4, wherein a portion of the closed path between the lowermost position (LP) and the uppermost position (UP) extends vertically.

6. The cargo loading device according to one or more of claims 1 to5, wherein a height adjustable transfer platform (31) is provided on the base assembly (5),
wherein the height of the platform (31) relative to the base assembly (5) is adjustable, and
wherein at least for a part of the height positions of the platform (31), the drive device (25) is adjustable such that each one of the support positions can be aligned with the platform (31), so that a cargo container (11) may be transferred from the one support position to the platform (31) by a horizontal movement.

7. The cargo loading device according to claim6, wherein the transfer platform (31) extends between a first end (35) and a second end (37), the first end (35) pointing towards and being adjacent to the transfer device (9),
wherein the platform (31) is provided with a transport device adapted to shift cargo containers (11) between the first and second ends (35, 37).

8. The cargo loading device according to one or more of claims 1 to7, wherein the base assembly (5) comprise a chassis having wheels (7) such that the base assembly (5) is moveable on a taxiway (3).

9. The cargo loading device according to claims 6 or 7 and claim 8, wherein the base assembly (5) comprises a first base element and a second base element, being separable from each other and each being provided with a chassis,
wherein the first base element carries the hight adjustable platform and
wherein the second base element carries the transfer device.

10. The cargo loading device according to claim 9, wherein one of the first base element and the second base element is formed as a tractor and the other of the first base element and the second base element is formed as a trailer.
